# EUROPÄISCHE PATENTSCHRIFT

(11) **EP 3 348 142 B1**
(45) Veröffentlichungstag und Bekanntmachung des Hinweises auf die Patenterteilung: **16.03.2022**
(21) Anmeldenummer: 18401001.5
(22) Anmeldetag: 03.01.2018
(51) Int. Cl.: A01M 7/00

(54) **VERFAHREN, FLÜSSIGKEITSKREISLAUF UND SPRITZEINRICHTUNG ZUM AUSBRINGEN EINER SPRITZFLÜSSIGKEIT AUF EINER LANDWIRTSCHAFTLICHEN FLÄCHE**
METHOD, LIQUID CIRCUIT AND SPRAYING DEVICE FOR APPLYING A SPRAYED LIQUID ON AN AGRICULTURAL AREA
PROCÉDÉ, CIRCUIT DE LIQUIDE ET DISPOSITIF DE PULVÉRISATION DESTINÉS À DISTRIBUER UN LIQUIDE DE PULVÉRISATION SUR UNE SURFACE AGRICOLE

(30) Priorität: 17.01.2017 DE 102017100778
(43) Veröffentlichungstag der Anmeldung: 18.07.2018
(60) Teilanmeldung: 19157359.1
(73) Patentinhaber: Amazonen-Werke H. Dreyer SE & Co. KG, 49205 Hasbergen (DE)
(72) Erfinder: Marggraf, Ulla, 38124 Braunschweig (DE)

(56) Entgegenhaltungen:
- WO-A1-2012/152758
- WO-A1-2013/087103
- DE-A1-102009 026 234

## Beschreibung

Die Erfindung betrifft ein Verfahren zum Ausbringen einer Spritzflüssigkeit auf einer Fläche, insbesondere einer landwirtschaftlichen Fläche, gemäß dem Oberbegriff des Anspruchs 1. Des Weiteren betrifft die Erfindung einen Flüssigkeitskreislauf für eine Spritzeinrichtung gemäß dem Oberbegriff des Anspruchs 10. Schließlich betrifft die Erfindung eine Spritzeinrichtung gemäß dem Oberbegriff des Anspruchs 16.

Spritzvorrichtungen werden insbesondere im landwirtschaftlichen Bereich vielfach eingesetzt. Typischerweise handelt es sich dabei um sogenannte Feldspritzen. Sie dienen in der Regel zum Ausbringen von Spritzflüssigkeiten auf typischerweise landwirtschaftlich genutzten Flächen, wie Äckern, Feldern oder ähnlichem. Dabei wird die Spritzflüssigkeit auf der Fläche entsprechend einer Vorgabe verteilt. Im einfachsten Fall erfolgt eine gleichmäßige Verteilung, gegebenenfalls kann die ausgebrachte Menge aber auch lokal unterschiedlich sein, beispielsweise zur Anpassung an Bodenunterschiede.

Die ausgebrachte Spitzflüssigkeit enthält dabei üblicherweise wenigstens einen Wirkstoff. Bei dem oder den Wirkstoffen kann es sich beispielsweise um Düngemittel, Fungizide, Pestizide, Herbiziden wie auch andere Mittel handeln. Üblicherweise wird ein konzentriertes Spritzmittel verwendet, das den wenigstens einen Wirkstoff oder auch mehrere Wirkstoffe enthält. Dieses Spritzmittel wird mit einer Trägerflüssigkeit, wie insbesondere Wasser, derart verdünnt, dass die Wirkstoffe in einer gut pumpbaren und somit gut dosierbaren Menge vorliegen.

Diese Vorbereitung der Spritzflüssigkeit beziehungsweise die eigentliche Vermischung von Spritzmittel und Trägerflüssigkeit stellt dabei eine große Herausforderung dar. Eine Bestückung eines großen Tanks mit fertig angemischter Spritzflüssigkeit aus Spritzmittel und Trägerflüssigkeit führt in der Regel zu zu entsorgenden Restmengen.

Daher wird im Stand der Technik versucht, mit Mischkammern in der Nähe der Spritzdüsen der Spritzeinrichtung zu arbeiten, in denen die Vermischung von hoch konzentriertem Spritzmittel mit der Trägerflüssigkeit erfolgt. Die EP 1 749 443 A1 und die WO 2012 152 758 A1 beschreiben beispielsweise ein derartiges landwirtschaftliches Spritzgerät, bei dem die Spritzflüssigkeit aus einer Trägerflüssigkeit und wenigstens einem Wirkstoff in einer Mischkammer vermischt wird, bevor sie ausgebracht wird. Gemäß der DE 10 2015 004 241 A1 kann der auszubringende Wirkstoff in einem Minimischbehälter vordosiert werden. Aus der EP 1 932 424 A1 ist dagegen eine Spritzvorrichtung zum Ausbringen von Flüssigkeiten für landwirtschaftliche Zwecke bekannt, bei der die Zusammenführung und Vermischung eines Wirkstoffs mit einer Trägerflüssigkeit in der Mischkammer unter zumindest annähernd konstantem Druck erfolgt.

In der WO 2013 087 103 A1 wird eine Trägerflüssigkeit sowohl in eine Hauptstromleitung als auch in eine Nebenstromleitung geliefert, wobei eine Gemischkomponente in die Nebenstromleitung eingespeist und mit der Trägerflüssigkeit vermischt wird. Die DE 10 2009 026 234 A1 zeigt, dass ein Wirkstoffmittel mit einer Flüssigkeit in einem Vormischbehälter vorverdünnt und anschließend mit der Trägerflüssigkeit vermischt wird.

Nachteilig an den bekannten Spritzvorrichtungen und Verfahren zum Ausbringen einer Spritzflüssigkeit auf einer landwirtschaftlichen Fläche ist dabei, dass sowohl die Reaktionszeiten der Spritzeinrichtung wie auch die Genauigkeit bei der Anmischung aufgrund sehr kleiner Mengen hoch konzentrierter Spritzmittel zu wünschen übrig lassen. Außerdem variiert die Verdünnung und damit die Genauigkeit je nach verwendetem Spritzmittel. Schließlich ist eine sehr große Spannweite der Pumpenanforderungen erforderlich.

Es ist daher eine Aufgabe der Erfindung, ein Verfahren zum Ausbringen einer Spritzflüssigkeit auf einer insbesondere landwirtschaftlichen Fläche bereitzustellen, das insbesondere die vorstehend genannten Nachteile beseitigt. Bevorzugt sollen die Geschwindigkeit und die Genauigkeit bei der Verdünnung des Spritzmittels verbessert werden.

Diese Aufgabe wird gelöst durch ein Verfahren zum Ausbringen einer Spritzflüssigkeit auf einer landwirtschaftlichen Fläche mit den Maßnahmen des Anspruchs 1.

Dies bietet den Vorteil, dass das insbesondere ursprünglich hoch konzentrierte Spritzmittel zunächst mit Trägerflüssigkeit verdünnt wird. So lässt es sich besser pumpen und dosieren. Es muss zum Erreichen der gleichen Endkonzentration nämlich eine besser abmessbare, größere Menge Vormischflüssigkeit als Spritzmittel zudosiert werden. Das Herstellen beziehungsweise Anmischen der Vormischflüssigkeit erfolgt insbesondere durch die beziehungsweise mittels der Spritzeinrichtung. Als Vorteile sind zu nennen, dass die Pumpengröße variabler ist als im Stand der Technik, da die Dosierung weniger zeitkritisch ist. Außerdem kann die Vormischung auf Vorrat hergestellt werden. Die Vormischung für jeden Wirkstoff kann wahlweise in einem einzigen oder mehreren Vormischungsbehältern bevorratet und/oder angemischt werden.

Es können mehrere oder alle Vormischflüssigkeiten in einem Arbeitsgang oder mehreren Arbeitsgängen parallel oder auch nacheinander ausgebracht werden. So lassen sich Vormischungsflüssigkeiten für verschiedene Zwecke und/oder Flächen bevorraten beziehungsweise flächenspezifisch ausbringen.

Jede Vormischungsflüssigkeit wird erfinungsgemäß in zumindest einem separaten Vormischungsbehälter bevorratet. Auch kann das Anmischen insbesondere durch Verdünnen beziehungsweise das Herstellen in separaten Behältern erfolgen. Damit kann jede Vormischungsflüssigkeit individuell angemischt und bevorratet werden. Sowohl gezielte Herstellung wie auch Entnahme ist so möglich. Es ist also vorgesehen, dass die Vormischung eines jeden Wirkstoffes separat vorliegt. Sie kann jeweils in einem oder mehreren Vormischungsbehältern bevorratet oder angemischt werden.

Besonders bevorzugt wird die wenigstens eine Vormischungsflüssigkeit mittels eines Vormischungskreislaufes gefördert und/oder umgepumpt, vorzugsweise kontinuierlich. Vorzugsweise ist hierfür wenigstens ein Vormischungskreislauf vorgesehen, weiter vorzugsweise für jede der Vormischungsflüssigkeiten ein Vormischungskreislauf. Das Umpumpen erfolgt vorzugsweise zwischen einem Vormischungstank und wenigstens einer Spritzdüse. Somit kann vorzugsweise kontinuierlich die Vormischungsflüssigkeit an die Spritzdüse gefördert werden. Im Bereich der Spritzdüse kann eine Verdünnung der Vormischflüssigkeit mittels Trägerflüssigkeit zur Spritzflüssigkeit erfolgen. Die Spritzflüssigkeit erhält so die korrekte Konzentration zum Ausbringen. Außerdem erfolgt dies vor allem sehr schnell. Schließlich ist eine Umwälzung der Vormischung wie auch eine Vermischung im Vormischbehälter aufgrund der überschaubaren Menge auf einfache Weise möglich.

Insbesondere wird ein vorbekanntes Volumen der oder jeder Vormischflüssigkeit angemischt. Die Vormischflüssigkeit wird vorzugsweise in einem oder wenigstens einem Vormischungsbehälter beziehungsweise Tank mit bekanntem Volumen angemischt. Weiter vorzugsweise weisen alle Vormischungsbehälter dasselbe Volumen auf. Besonders bevorzugt ist ein Volumen von zwischen 1 Liter und 50 Liter, weiter bevorzugt zwischen 5 Liter und 20 Liter, insbesondere von 1, 5 oder 10 Liter vorgesehen. Bei einem bekannten Volumen, vorzugsweise identischen Volumen kann jeweils auf eine bekannte spezifische Konzentration des jeweiligen Spritzmittels verdünnt werden. Dies vereinfacht die Anmischung und die Weiterverarbeitung. Übrig bleibende Mengen der Vormischung sind im Vergleich zur "Komplettverdünnung", also einer Verdünnung und Bereitstellung der fertigen Mischung im Vorratsbehälter der Spritzvorrichtung, gut handhabbar, da es sich um wesentlich kleinere Mengen handelt. Es wird also jeweils nur eine vergleichsweise geringe Menge der Vormischung vorgehalten, so dass ggf. nur eine geringe Menge übrigbleibt und entsorgt werden muss. Da die Vormischung im Vergleich zur Komplettverdünnung höher konzentriert ist, ist die vergleichsweise geringe Menge der Vormischung jedoch ergiebiger als dieselbe Menge an komplettverdünnter Flüssigkeit. Der Vormischungsbehälter kann bei Bedarf jeweils rechtzeitig wieder mit Wirkstoff und Trägerflüssigkeit zur Bereitstellung einer Vormischung aufgefüllt werden.

Vorzugsweise wird das Spritzmittel beziehungsweise der wenigstens eine Wirkstoff mit der Trägerflüssigkeit zur Vormischflüssigkeit derart verdünnt, dass eine vorherbestimmte Konzentration des Spritzmittels beziehungsweise des wenigstens einen Wirkstoffs erreicht wird. So kann eine bestimmte, vorzugsweise für das jeweilige Spritzmittel optimale Konzentration in der Vormischflüssigkeit eingestellt werden. Diese Vormischflüssigkeit kann dann auf einfache und reproduzierbare Weise zur eigentlichen Spritzflüssigkeit weiter verdünnt werden. Die vorverdünnte Vormischflüssigkeit lässt sich aufgrund des größeren Volumens beziehungsweise der geringeren Dichte des Spritzmittels wesentlich einfacher und vor allem genauer fördern als das hoch konzentrierte Spritzmittel.

Vorzugsweise werden alle Vormischungsflüssigkeiten mit derart vordefinierter Konzentration des Spritzmittels beziehungsweise des wenigstens einen Wirkstoffs angemischt. So ist ein identisches oder vergleichbares Verdünnungsverhältnis mit Trägerflüssigkeit zum Ausbringen für eine vorgesehene Wirkung erforderlich. Dies bedeutet, dass ein gleiches oder zumindest ähnliches Verdünnungsverhältnis für alle Vormischungen vorgesehen sein kann. Dies verkleinert deutlich den Bereich unterschiedlicher Verdünnungen an den Spritzdüsen, der üblicherweise an einer Spritzeinrichtung vorzusehen ist, um völlig unterschiedliche Spritzmittel mit unterschiedlichen Verdünnungserfordernissen ausbringen zu können. Durch die Vormischung erfolgt also eine Homogenisierung der Verdünnungsbereiche.

Es kann vorgesehen sein, dass vorzugsweise alle Vormischungsflüssigkeiten mit derart vordefinierter Konzentration des Spritzmittels beziehungsweise des wenigstens einen Wirkstoffs angemischt werden, dass die für den Spritzvorgang zu fördernde Rate an Vormischungsflüssigkeit auf die hierfür verwendete Pumpe abgestimmt ist. Hierdurch können weitere Nachteile des Standes der Technik behoben werden. Insbesondere wird das Problem gelöst, dass je nach Wirkstoff eine größere oder kleinere Menge pro Zeiteinheit für die vorgesehene Behandlung der Pflanzen gefördert werden muss. Es kann nun also vorgesehen sein, dass unter Berücksichtigung des verwendeten Wirkstoffs und ggf. weiterer Parameter, wie Fahrgeschwindigkeit, Arbeitsbreite usw. die zu fördernde Rate an Wirkstoff pro Fläche bzw. Zeiteinheit ermittelt wird. Unter Berücksichtigung der für die Förderung der Vormischung verwendeten Pumpe, insbesondere der Förderleistung der Pumpe kann nun das Verhältnis der Vormischung so gewählt werden, dass die für die geplante Behandlung notwendige Wirkstoffmenge pro Zeiteinheit mit der vorhandenen Pumpe in optimaler Weise gefördert werden kann. In dem Fall wenn ein Wirkstoff mit einer großen Aufwandmenge pro Fläche mit einer Pumpe mit vergleichsweise kleinem Fördervolumen verarbeitet werden muss, würde das Verdünnungsverhältnis der Vormischung also in der Weise angepasst, dass eine konzentriertere Vormischung gewählt wird als bei einem Wirkstoff mit kleiner Aufwandmenge und/oder einer Pumpe mit einem großen Fördervolumen.

Die Aufwandmenge des jeweils verwendeten Wirkstoffs ist vorzugsweise in einem Steuergerät der Feldspritze hinterlegt oder wird durch den Anwender in dieses eingegeben. Zusätzlich ist die optimale Förderleistung der Pumpe zur Förderung der Vormischung des jeweiligen Wirkstoffes bzw. der Bereich möglicher Förderleistungen der Pumpe bekannt. Außerdem ist die Arbeitsbreite der Feldspritze in dem Steuergerät hinterlegt oder wird durch den Anwender ausgewählt bzw. eingegeben. Vorzugsweise ist die verwendete Fahrzeuggeschwindigkeit oder zumindest ein Bereich möglicher Fahrgeschwindigkeiten dem Steuergerät ebenfalls bekannt oder wird durch den Anwender eingegeben. Somit sind alle für die Bestimmung der zu fördernden Aufwandmenge also Wirkstoffmenge pro Fläche bzw. bei Berücksichtigung der Geschwindigkeit der Wirkstoffmenge pro Zeit bekannt, so dass das Vormischungsverhältnis und damit die in den Vormischungsbehälter zu dosierende Menge Wirkstoff und Trägerflüssigkeit bekannt ist. Entsprechend werden idealerweise die Pumpen und Ventile zur Förderung des reinen Wirkstoffs und der Trägerflüssigkeit in den jeweiligen Vormischungsbehälter angesteuert, um das für den jeweiligen Vormischungsbehälter ermittelte Vormischungsverhältnis herzustellen.

Die Abgabe der Spritzflüssigkeit kann vorzugsweise düsenweise und/oder teilbreitenweise erfolgen. Vorzugsweise wird eine ausbringfähige Verdünnung der Vormischungsflüssigkeit erst zur Abgabe aus der entsprechenden Spritzdüse beziehungsweise Teilbreite vorgenommen. Damit kann die Spritzflüssigkeit bedarfsgerecht aus der Vormischungsflüssigkeit hergestellt, insbesondere verdünnt werden. Die üblicherweise anfallenden, größeren Mengen der fertig angemischten Spritzflüssigkeit entfallen.

Die eingangs geschilderte Aufgabe wird auch gelöst durch einen Flüssigkeitskreislauf für eine Spritzeinrichtung, vorzugsweise eine Feldspritze, mit den Merkmalen des Anspruchs 10. Der Flüssigkeitskreislauf ist vorgesehen zum Ausbringen einer Spritzflüssigkeit mit insbesondere wenigstens einem Wirkstoff auf einer landwirtschaftlichen Fläche. Vorzugsweise kann dies mit einem wie oben beziehungsweise in den Ansprüchen beschriebenen Verfahren erfolgen. Der Flüssigkeitskreislauf zeichnet sich dadurch aus, dass einerseits mehrere Vormischungsbehälter zur Herstellung mehrerer konzentrierter Vormischungsflüssigkeiten aus wenigstens einem Spritzmittel und einer Trägerflüssigkeit vorgesehen sind. Andererseits liegen die Vormischungsflüssigkeiten zum Ausbringen in mit einer weiteren Menge Trägerflüssigkeit verdünnten Form als Spritzflüssigkeiten vor. Der Vormischungsbehälter dient dabei zum Herstellen und Aufbewahren der Vormischungsflüssigkeit.

Erfindungsgemäß ist für jede der Vormischungsflüssigkeiten jeweils zumindest ein separater Vormischungsbehälter vorgesehen. Besonders bevorzugt weisen mehrere der, weiter vorzugsweise alle Vormischungsbehälter dasselbe Volumen auf. So kann eine vordefinierte Menge der jeweiligen Vormischung hergestellt werden. Die Mischungsverhältnisse sind auf einfache Weise ermittelbar. Besonders bevorzugt ist ein Volumen von zwischen 1 Liter und 50 Liter, weiter bevorzugt zwischen 5 Liter und 20 Liter, insbesondere von 1, 5 oder 10 Liter vorgesehen. Bei einem bekannten Volumen, vorzugsweise identischen Volumen kann jeweils auf eine bekannte spezifische Konzentration des jeweiligen Spritzmittels verdünnt werden. Dies vereinfacht die Anmischung und die Weiterverarbeitung.

Es kann ebenfalls vorgesehen sein, in Abhängigkeit des verwendeten Wirkstoffs und weiterer Parameter wie bspw. Arbeitsbreite und Fahrgeschwindigkeit die zu fördernde Rate an Wirkstoff vorzugsweise mittels eines Steuergerätes zu ermitteln und die Vormischung an die Förderleistung der Pumpe anzupassen, die für die Förderung der jeweiligen Vormischung vorgesehen ist. Auf diese Weise kann insbesondere durch das Steuergerät eine optimale Konzentration der jeweiligen Vormischung ermittelt werden, so dass diese an die Förderleistung der Pumpe angepasst ist. Vorzugsweise ist das Steuergerät ausgebildet, die Ventile und Pumpen zur Förderung des reinen Wirkstoffs und der Trägerflüssigkeit derart anzusteuern, dass das Vormischungsverhältnis im Vormischungsbehälter in berechneter Weise eingestellt wird.

Es ist insbesondere wenigstens ein Flüssigkeitskreislauf zum Umpumpen der wenigstens einen Vormischungsflüssigkeit zwischen dem wenigstens einen Vormischungsbehälter und wenigstens einer Spritzdüse der Spritzeinrichtung vorgesehen. Des Weiteren kann insbesondere ein separater Flüssigkeitskreislauf für jede Vormischungsflüssigkeit vorgesehen sein. Damit wird erreicht, dass die oder jede Vormischungsflüssigkeit jederzeit in ausreichender Menge und mit gleichbleibender Konzentration an der Düse zur Verfügung steht. Die abschließende Vermischung beziehungsweise Verdünnung mit Trägerflüssigkeit zur Konzentration des Spritzmittels zum Ausbringen als Trägerflüssigkeit wird damit deutlich vereinfacht, da die Vormischungsflüssigkeit in bekannter und gut dosierbarer Konzentration vorliegt. Vorzugsweise ist zusätzlich ein Kreislauf für die Trägerflüssigkeit zur Bereitstellung derselben an der Spritzdüse vorgesehen.

Die Spritzdüsen der Spritzeinrichtung sind vorzugsweise für eine düsenweise und/oder teilbreitenweise Freigabe der Abgabe der Spritzflüssigkeit vorgesehen, indem ein düsenweises und/oder teilbreitenweises Zusammenmischen von Vormischflüssigkeit und Trägerflüssigkeit erfolgt. Damit wird ein gezieltes Anmischen in unmittelbarer Nähe der Spritzdüse ermöglicht.

Vorzugsweise erfolgt eine ausbringfähige Verdünnung der Vormischungsflüssigkeit erst bei Freigabe der entsprechenden Spritzdüse beziehungsweise Teilbreite. Dabei ist vorzugsweise eine separate Ventileinheit und/oder Dosierpumpe je Spritzdüse beziehungsweise Teilbreite vorgesehen. So kann gezielt erst unmittelbar beim oder kurz vor dem Ausbringen die Fertigmischung der Spritzflüssigkeit aus Vormischungsflüssigkeit und Trägerflüssigkeit erfolgen. Damit erfolgt eine besonders bedarfsgerechte Anmischung.

Wenigstens ist eine Mischkammer zur Verdünnung der wenigstens einen Vormischflüssigkeit mit Trägerflüssigkeit in der Nähe der Spritzdüse vorgesehen, vorzugsweise eine separate Mischkammer je Spritzdüse beziehungsweise zumindest je Teilbreite der Spritzvorrichtung. Damit kann die Vermischung vorzugsweise unmittelbar an oder in der Nähe der Spritzdüse vorgenommen werden.

Die Aufgabe wird außerdem gelöst durch eine Spritzvorrichtung, vorzugsweise Feldspritze, zum Ausbringen einer Spritzflüssigkeit auf einer landwirtschaftlichen Fläche gemäß Anspruch 16. Die Spritzvorrichtung weist vorzugsweise einen Flüssigkeitskreislauf gemäß vorstehenden Beschreibungen beziehungsweise den entsprechenden Patentansprüchen auf. Insbesondere ist die Spritzeinrichtung zum Ausführen eines Verfahrens gemäß den vorstehenden Beschreibungen beziehungsweise den entsprechenden Patentansprüchen geeignet.

Ein bevorzugtes Ausführungsbeispiel der Erfindung wird im Folgenden anhand der Zeichnungen näher beschrieben. In diesen zeigen:
- Fig. 1: eine schematische Darstellung einer erfindungsgemäßen Feldspritze, und
- Fig. 2: einen erfindungsgemäßen Flüssigkeitskreislauf für eine Spritzvorrichtung.

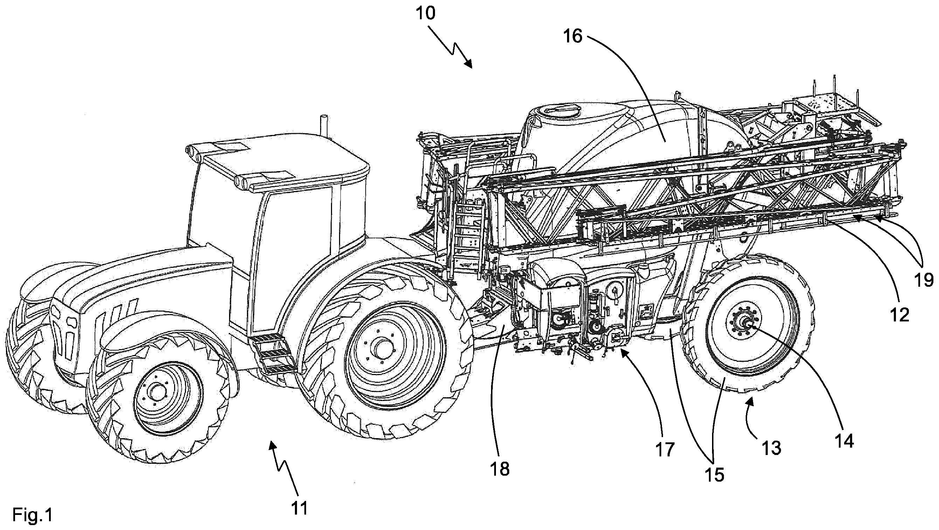

In der Fig. 1 ist eine erfindungsgemäße Feldspritze 10 in einer perspektivischen Darstellung gezeigt, die von einem Zugfahrzeug 11 gezogen wird. Die Feldspritze 10 ist dabei mit für den Transport eingeklapptem Spritzgestänge 12 dargestellt. Als Fahrwerk 13 ist dabei eine Achse 14 mit zwei Rädern 15 vorgesehen.

Die Feldspritze 10 weist in üblicher Weise einen Vorratstank 16 für Spritzflüssigkeit auf. Bei der Spritzflüssigkeit handelt es sich üblicherweise um Wasser wahlweise versetzt mit einem oder mehreren Wirkstoffen oder weiteren Stoffen, wie zum Beispiel Düngemittel. Außerdem ist hier exemplarisch ein Mischtanksystem 17 gezeigt, das seitlich am Rahmen 18 der Feldspritze 10 angeordnet ist.

Zum Ausbringen wird das Spritzgestänge 12 dann in üblicher Weise ausgeklappt, so dass es auf beiden Seiten praktisch im rechten Winkel zur Fahrtrichtung der Feldspritze 10 absteht. Am Spritzgestänge 12 ist eine Vielzahl von Spritzdüsen 19 angeordnet. Die Spritzdüsen 19 sind dabei typischerweise mehr oder weniger gleichmäßig entlang des Spritzgestänges 12 verteilt angeordnet, so dass ein gleichmäßiges Ausbringen der fertigen Spritzflüssigkeit, also nach Vermischen von Trägerflüssigkeit mit den gewünschten Wirkstoffen beziehungsweise Spritzmitteln sichergestellt werden kann.

Vor dem Ausbringen wird die Spritzflüssigkeit aber in der Regel noch mit wenigstens einem Wirkstoff aus einem Wirkstofftank versetzt. Dies erfolgt erfindungsgemäß durch Zudosieren des Wirkstoffs zur Spritzflüssigkeit in einer Dosiervorrichtung. Die Trägerflüssigkeit wird dazu zunächst aus dem Vorratstank 16 mittels einer Pumpe zur Dosiervorrichtung gefördert.

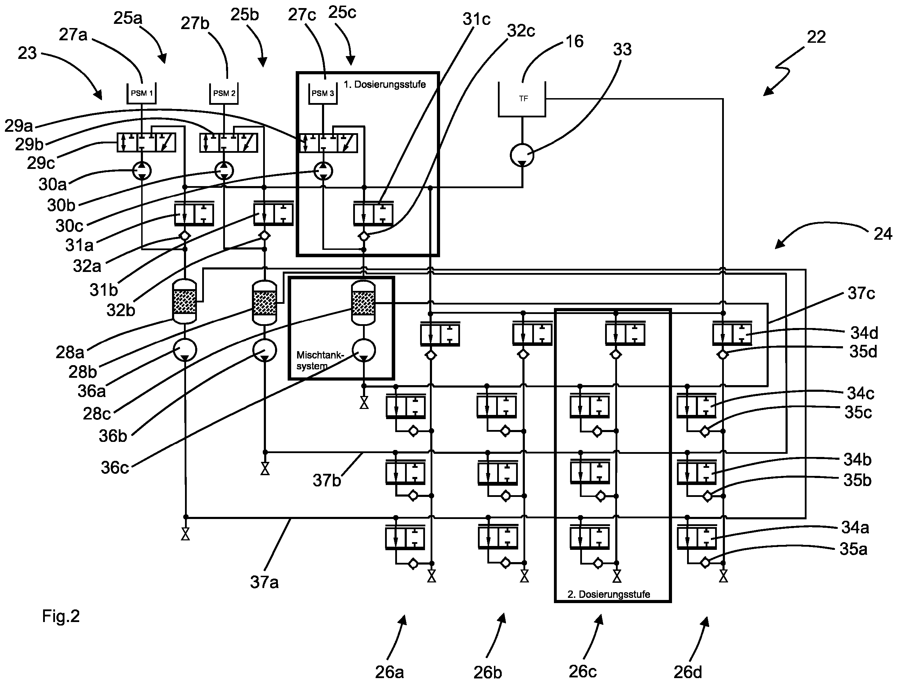

Zur Veranschaulichung ist dazu in Fig. 2 ausschnittsweise ein beispielhafter erfindungsgemäßer Flüssigkeitskreislauf 22 skizziert. Der Flüssigkeitskreislauf 22 zeigt hier nur die für den erfindungsgemäßen Betrieb wichtigen Bestandteile der zugehörigen Feldspritze 10.

In der Dosiervorrichtung des Flüssigkeitskreislaufs 22 sind demnach zwei Dosierstufen hintereinander geschaltet. Es handelt sich um eine erste Dosierstufe 23 und eine zweite Dosierstufe 24. Die zweite Dosierstufe 24 übernimmt dabei die in der ersten Dosierstufe 23 vorbereiteten Vormischungen mit definierter Konzentration.

Jede der Dosierstufen 23, 24 weist im beschriebenen Ausführungsbeispiel allerdings mehrere Dosiereinheiten 25 beziehungsweise 26 auf. Hier sind demnach jeweils drei Dosiereinheiten 25a, 25b, 25c beziehungsweise 26a, 26b, 26c vorgesehen.

Die Anzahl der parallelen Dosiereinheiten 25, 26 kann abhängig von der gewünschten Anzahl an unabhängig voneinander steuerbaren Zudosierungen von Wirkstoffen, wie beispielsweise Pflanzenschutzmitteln (PSM) und ähnlichem, gewählt werden. Typischerweise handelt es sich daher dabei um Dosiereinheiten 25, 26 in Modulform, so dass diese also nahezu beliebig kombinierbar oder entfernbar sein können.

Indem tatsächlich wie im Ausführungsbeispiel mehrere Dosiereinheiten 25a, 25b, 25c beziehungsweise 26a, 26b, 26c, 26d vorhanden sind, kann eine gleichzeitige Zudosierung verschiedener Wirkstoffe beziehungsweise Spritzmittel zur Trägerflüssigkeit zur Herstellung der ausbringbaren Spritzflüssigkeit in einem Arbeitsgang erfolgen. So können in einer Fahrt über eine landwirtschaftliche Fläche gleichzeitig mehrere Spritzmittel beziehungsweise Wirkstoffe ausgebracht werden. Dabei können auch entsprechende Wechselwirkungen der Mittel berücksichtigt werden. Um ein paralleles Ausbringen zu ermöglichen, sind einerseits alle ersten Dosiereinheiten 25a, 25b, 25c und andererseits alle zweiten Dosiereinheiten 26a, 26b, 26c, 26d jeweils parallel zueinander angeordnet.

Jede erste Dosiereinheit 25a, 25b, 25c beinhaltet dabei jeweils einen Wirkstofftank oder Wirkstoffbehälter 27a, 27b, 27c. Diese Wirkstoffbehälter 27a, 27b, 27c sind hier zur Bevorratung je eines Wirkstoffs oder Spritzmittels, wie hier beispielsweise von Pflanzenschutzmitteln PSM1, PSM2, PSM3 vorgesehen. Aus diesen Wirkstoffbehältern 27a, 27b, 27c kann die gewünschte Menge des jeweiligen Wirkstoffs entnommen werden und erfindungsgemäß als Vormischung bereitgestellt werden.

Zur Vormischung beziehungsweise Vordosierung der jeweiligen Wirkstoffe sind separate Vormischbehälter 28a, 28b, 28c vorgesehen. In diesen Vormischbehältern 28a, 28b, 28c wird der Wirkstoff auf die gewünschte Konzentration der Vormischung durch Zugabe von Trägerflüssigkeit, wie beispielsweise Wasser, gebracht. Vormischungsbehälter und Vorratsspeicher können als Einheit im jeweiligen Vormischbehälter 28 zusammengefasst oder separat angeordnet sein.

Zur Steuerung der Mengen an Wirkstoff und Spritzflüssigkeit dienen hier jeweils separate Dosierventile 29a, 29b, 29c, die als 3/3-Wegeventile ausgebildet sind. Damit kann unter anderem die Flüssigkeitszufuhr aus dem Wirkstoffbehälter 27a, 27b, 27c in den zugeordneten Mischbehälter 28a, 28b, 28c erfolgen. Alternativ kann in dieser Stellung eine Zuführung von frischer Trägerflüssigkeit aus dem Vorratstank 16 erfolgen. Schließlich kann in einer dritten Ventilstellung der Durchsatz unterbunden werden, indem das Dosierventil 29a, 29b, 29c also abgesperrt wird. Das Ventil in der vorliegenden Form bietet den Vorteil, dass die Pumpen 30a, 30b, 30c mit Trägerflüssigkeit gereinigt werden können. Ansonsten wären hier auch 2/2-Wegeventile statt der dargestellten 3/3-Wegeventile denkbar oder auch andere Ventilanordnungen.

Um eine Umschaltung zwischen der Zuführung von frischer Trägerflüssigkeit aus dem Vorratstank 16 zur Verdünnung des Wirkstoffs und damit zur Herstellung der Vormischung einerseits und der Trennung des Trägerflüssigkeitssystems gegenüber dem Mischtank andererseits zu ermöglichen, ist ein zweites Umschaltventil 31a, 31b, 31c vorgesehen. Dieses Umschaltventil 31a, 31b, 31c ist zwischen dem Vorratstank 16 und Mischbehälter 28a, 28b, 28c angeordnet. Es ist dabei mit der Leitung zur Zuführung von frischer Spritzflüssigkeit verbunden. Ein Zurückpumpen von mit Spritzmitteln kontaminierter Flüssigkeit durch das Ventil ist durch die Verwendung eines entsprechenden Ventils 29a, 29b, 29c oder entsprechende Rückschlagventile vorzugsweise unterbunden.

Vor dem Mischbehälter 28a, 28b, 28c ist außerdem jeweils noch ein Rückschlagventil 32a, 32b, 32c vorgesehen. Diese sorgen dafür, dass ein Eindringen des Wirkstoffes in das Trägerstoffsystem unterbunden wird.

Jede Dosiereinheit 25a, 25b, 25c ist außerdem mit einer Dosierpumpe 30a, 30b, 30c ausgestattet. Diese Dosierpumpen 30a, 30b, 30c sind zwischen den Dosierventilen 29a, 29b, 29c und dem jeweiligen Mischbehälter 28a, 28b, 28c angeordnet. Sie weisen ein definiertes Fördervolumen auf, um eine korrekte Befüllung der nachfolgend angeordneten Mischbehälter 28a, 28b, 28c gewährleisten zu können. So kann durch Zeitmessung die Fördermenge ermittelt und die Einschaltdauer der jeweiligen Dosierpumpe 30a, 30b, 30c zur Herstellung der Vormischung verwendet werden.

Wird der Flüssigkeitsstand in den Vormischungsbehältern 28a, 28b, 28c mittels nicht dargestellten Sensoren, beispielsweise Füllstandssensoren in den Vormischungsbehältern 28a, 28b, 28c und/oder durch eine Überwachung der Ventilstellung der Ventile in den Dosiereinheiten 26a, 26b, 26c, 26d ... in Kombination mit Durchflussmessern und/oder Drucksensoren in den Flüssigkeitsleitungen überwacht, kann in Abhängigkeit der bekannten Förderleistung der Pumpen 30a, 30b, 30c ein rechtzeitiges Auffüllen der Vormischungsbehälter 28a, 28b, 28c erreicht werden. Das Wiederauffüllen der Vormischungsbehälter 28a, 28b, 28c wird vorzugsweise durch ein nicht dargestelltes Steuergerät an der Feldspritze oder einem Traktor gesteuert und überwacht. Insbesondere kann durch das Steuergerät auch der Verlauf des Füllstandes über die Zeit protokolliert und ein Leerstand oder das Unterschreiten eines Grenzwertes für den Füllstand hieraus prognostiziert werden. Auf diese Weise kann durch das Steuergerät sichergestellt werden, dass keiner der Vormischungsbehälter 28a, 28b, 28c zu irgendeinem Zeitpunkt leerläuft und das Wiederauffüllen stets rechtzeitig erfolgt. Es ist somit möglich auch Pumpen 30a, 30b, 30c mit vergleichsweise eng begrenzter Förderleistung zu wählen, da ein Wiederauffüllen der Vormischungsbehälter während des Betriebs zu beliebigen Zeitpunkten erfolgen kann und nicht zeitkritisch ist, sofern noch ausreichend Vormischungsflüssigkeit in dem Vormischungsbehälter bevorratet ist.

Die Dosierpumpen 30a, 30b, 30c dienen also dazu, die Flüssigkeiten entsprechend zu fördern. Einerseits wird eine Entnahme des Wirkstoffs aus dem jeweiligen Wirkstoffbehälter 27a, 27b, 27c und eine Zuführung in den zugeordneten Mischbehälter 28a, 28b, 28c ermöglicht. Andererseits wird auch eine Reinigung des Dosiersystems ermöglicht.

In der zweiten Dosierstufe 24 wird dann die Vormischung für jede Teilbreite der Feldspritze 10 separat auf die ausbringfähige Konzentration verdünnt. Dazu ist für jede Teilbreite der Feldspritze 10 eine separate Dosiereinheit 26a, 26b, 26c, 26d vorgesehen. Diese weist jeweils Dosierventile 34a, 34b, 34c, 34d für jede der Vormischungen einerseits und für frische Trägerflüssigkeit andererseits auf. Die Trägerflüssigkeit wird aus dem Vorratstank 16 mittels einer Pumpe 33 gefördert.

Diese Dosierventile 34a, 34b, 34c, 34d dienen jeweils dazu, die richtige Mischung aus Vormischung und Spritzflüssigkeit in Abhängigkeit von den Anforderungen je Teilbreite und abhängig von der Bodenbeschaffenheit bzw. dem Wirkstoffbedarf einzustellen. Rückschlagventile 35a, 35b, 35c, 35d dienen auch hier dazu, unerwünschte Rückflüsse durch die Dosierventile 34a, 34b, 34c, 34d zu vermeiden. Gegebenenfalls können auch noch zusätzliche Stellglieder für die hier nicht im Detail gezeigten Spritzdüsen am Spritzgestänge 12 vorgesehen sein, mit denen sich Durchsatz und/oder Spritzcharakteristik verändern lassen.

Die Vormischung wird nun in dem jeweiligen Mischbehälter 28a, 28b, 28c durch geeignete Zugabemengen wenigstens eines der Wirkstoffe beziehungsweise Spritzmittels einerseits und durch Zugabe frischer Trägerflüssigkeit aus dem Vorrat 16 andererseits vorbereitet. Zur Zuführung der Wirkstoffe werden die entsprechenden Dosierpumpen 30a, 30b, 30c betrieben. Ein anschließendes Umwälzen mittels der Dosierpumpen 36a, 36b, 36c kann nach Erstellung der Vormischung über die Vormischungskreisläufe 37a, 37b, 37c erfolgen. Der Vorteil einer solchen Umwälzung besteht hierbei darin, dass die jeweilige Vormischung immer an den Ventilen 34a, 34b, 34c ohne Verzögerung ansteht und zudem ein permanentes Umwälzen der Vormischung in den Behältern 28a, 28b, 28c erfolgt, was eine unerwünschte Trennung der typischerweise als Emulsion vorliegenden Mischung in Spritzmittel und Trägerflüssigkeit verhindert.

So kann jeder der Mischbehälter 28a, 28b, 28c beispielsweise vollständig mit der jeweiligen Vormischung aufgefüllt werden. Die Vormischungen werden dabei erfindungsgemäß mit einer Konzentration des jeweiligen Spritzmittels beziehungsweise Wirkstoffs vorbereitet, die eine unmittelbare Vermischung gleicher oder zumindest ähnlicher Mengen der Vormischung zusammen mit einer entsprechenden Menge der frischen Trägerflüssigkeit durch die Spritzeinrichtung ermöglicht. Zur Förderung der Vormischung zur zweiten Dosierstufe 24 und damit zu den Spritzdüsen sind die Förderpumpen 36a, 36b, 36c zwischen den Dosierstufen 23 und 24 vorgesehen.

So kann auf einfache Weise in der zweiten Dosierstufe 24 die endgültige ausbringfähige Mischung aus der Vormischung der ersten Dosierstufe 23 hergestellt werden. Die ausbringfähige Mischung wird dann als sogenannte Spritzflüssigkeit wie beschrieben mittels der Spritzdüsen am Spritzgestänge 12 auf der landwirtschaftlichen Fläche ausgebracht.

In einem nicht dargestellten Steuergerät kann insbesondere die Förderleistung der Pumpen 36a, 36b, 36c hinterlegt sein, so dass sich die Verdünnungsverhältnisse in den Vormischungsbehältern 28a, 28b, 28c an die jeweilige Aufwandmenge, also die Ausbringrate Wirkstoff pro Fläche bzw. pro Zeit bei Berücksichtigung der Fahrgeschwindigkeit anpassen lassen. Hierzu ist dem Steuergerät die pro Fläche auszubringende Wirkstoffmenge, die Arbeitsbreite der Feldspritze und ggf. die Fahrgeschwindigkeit bekannt oder alternativ ein Geschwindigkeitsbereich, welcher für die Bearbeitung verwendet wird. Aus diesen Daten kann eine Vormischungskonzentration durch das Steuergerät berechnet werden, welche auf die Förderleistung der Pumpe abgestimmt ist. Dies führt zu dem Vorteil, dass auch für den Fall von Wirkstoffen PSM1 und PSM2, die mit sehr unterschiedlichen Mengen pro Fläche ausgebracht werden müssen, baugleiche Pumpen 36a, 36b verwendet werden können, indem das Mischungsverhältnis in den Vormischungsbehältern 28a, 28b, 28c so gewählt wird, dass die geförderte Flüssigkeitsmenge an Vormischungsflüssigkeit zumindest in derselben Größenordnung liegt.

Zu diesem Zweck kann das Steuergerät ausgebildet sein, das für die verwendeten Pumpen 36a, 36b, 36c ideale Verdünnungsverhältnis für die jeweilige Vormischung aus der auszubringenden Menge Wirkstoff PSM1, PSM2, PSM3 pro Fläche und der bekannten Arbeitsbreite und ggf. Fahrgeschwindigkeit zu ermitteln. Es kann auch eine konstante Fahrgeschwindigkeit angenommen und somit das Vormischungsverhältnis nur in Abhängigkeit der Wirkstoffmenge pro Fläche unter Berücksichtigung der Arbeitsbreite berechnet werden.

Das nicht dargestellte Steuergerät ist zudem vorzugsweise ausgelegt, die Dosierorgane, wie die Pumpen 30a, 30b, 30c, 33 und Ventile 29a, 29b, 29c, 31a, 31b, 31c derart anzusteuern, dass sich das gewünschte Mischungsverhältnis in den Vormischungsbehältern 28a,28b, 28c einstellt. Zu diesem Zweck können ggf. auch Füllstandsensoren in den Vormischungsbehältern 28a, 28b, 28c und/oder den Wirkstoffbehältern 27a, 27b, 27c und/oder dem Trägerflüssigkeitsbehälter 16 und/oder weitere Sensoren, wie Durchflusssensoren in den Zuleitungen durch das Steuergerät ausgelesen werden, aus denen sich das Mischungsverhältnis in dem jeweiligen Vormischungsbehälter berechnen lässt.

Zur Vermischung der Wirkstoffe untereinander und der Trägerflüssigkeit zur endgültigen Spritzbrühe kann eine hier nicht dargestellte, zusätzliche Mischkammer im Bereich der Spritzdüsen oder Teilbreiten vorzugsweise an jeder Spritzdüse oder Teilbreite vorgesehen sein.

### Bezugszeichenliste

- 10: Feldspritze
- 11: Zugfahrzeug
- 12: Spritzgestänge
- 13: Fahrwerk
- 14: Achse
- 15: Rad
- 16: Vorratstank
- 17: Mischtanksystem
- 18: Rahmen
- 19: Spritzdüse
- 22: Flüssigkeitskreislauf
- 23: erste Dosierstufe
- 24: zweite Dosierstufe
- 25a, 25b, 25c: Dosiereinheit
- 26a, 26b, 26c, 26d: Dosiereinheit
- 27a, 27b, 27c: Wirkstoffbehälter
- 28a, 28b, 28c: Vormischbehälter
- 29a, 29b, 29c: Dosierventil
- 30a, 30b, 30c: Dosierpumpe
- 31a, 31b, 31c: Umschaltventil
- 32a, 32b, 32c: Rückschlagventil
- 33: Pumpe
- 34a, 34b, 34c, 34d: Dosierventil
- 35a, 35b, 35c, 35d: Rückschlagventil
- 36a, 36b, 36c: Förderpumpe
- 37a, 37b, 37c: Vormischungskreislauf

## Patentansprüche

1. Verfahren zum Ausbringen einer Spritzflüssigkeit auf einer landwirtschaftlichen Fläche mittels einer Spritzvorrichtung, vorzugsweise Feldspritze (10), und/oder zum Betreiben einer Spritzvorrichtung, vorzugsweise einer Feldspritze (10), wobei wenigstens ein Spritzmittel mit einer Trägerflüssigkeit zu einer ausbringbaren Spritzflüssigkeit verdünnt und ausgebracht wird, wobei das Spritzmittel wenigstens einen Wirkstoff enthält, wobei mehrere konzentrierte Vormischungsflüssigkeiten aus einer Menge des wenigstens einen Spritzmittels und einer Menge Trägerflüssigkeit hergestellt und/oder bevorratet werden, und diese Vormischungsflüssigkeiten zum Ausbringen mit einer weiteren Menge Trägerflüssigkeit zur ausbringbaren Spritzflüssigkeit verdünnt werden, und **dadurch gekennzeichnet, dass** jede der Vormischungsflüssigkeiten jeweils in zumindest einem separaten Vormischungsbehälter (28a, 28b, 28c) bevorratet wird.

2. Verfahren nach einem der vorhergehenden Ansprüche, **dadurch gekennzeichnet, dass** wenigstens eine Vormischungsflüssigkeit mittels eines Vormischungskreislaufes (37a, 37b, 37c) umgepumpt wird, vorzugsweise zwischen einem Vormischungsbehälter (28a, 28b, 28c) und wenigstens einer Spritzdüse, wobei insbesondere ein Vermischen beziehungsweise Umwälzen im Vormischbehälter (28a, 28b, 28c) erfolgt.

3. Verfahren nach einem der vorhergehenden Ansprüche, **dadurch gekennzeichnet, dass** ein vorbekanntes Volumen der oder jeder Vormischflüssigkeit angemischt wird, wobei die Vormischflüssigkeit vorzugsweise in einem Vormischungsbehälter (28a, 28b, 28c) mit bekanntem Volumen angemischt wird, wobei vorzugsweise alle Vormischungsbehälter (28a, 28b, 28c) dasselbe Volumen aufweisen.

4. Verfahren nach einem der vorhergehenden Ansprüche, **dadurch gekennzeichnet, dass** das Spritzmittel beziehungsweise der wenigstens eine Wirkstoff mit der Trägerflüssigkeit zur Vormischflüssigkeit derart verdünnt wird, dass eine vorherbestimmte Konzentration des Spritzmittels beziehungsweise des wenigstens einen Wirkstoffs erreicht wird.

5. Verfahren nach einem der vorhergehenden Ansprüche, **dadurch gekennzeichnet, dass** vorzugsweise alle Vormischungsflüssigkeiten mit derart vordefinierter Konzentration des Spritzmittels beziehungsweise des wenigstens einen Wirkstoffs angemischt werden, dass ein identisches oder vergleichbares Verdünnungsverhältnis mit Trägerflüssigkeit zum Ausbringen für eine vorgesehene Wirkung erforderlich ist.

6. Verfahren nach einem der vorhergehenden Ansprüche, **dadurch gekennzeichnet, dass** vorzugsweise alle Vormischungsflüssigkeiten mit derart vordefinierter Konzentration des Spritzmittels beziehungsweise des wenigstens einen Wirkstoffs angemischt werden, dass die für den Spritzvorgang zu fördernde Rate an Vormischungsflüssigkeit auf die hierfür verwendete Pumpe abgestimmt ist.

7. Verfahren nach einem der vorhergehenden Ansprüche, **dadurch gekennzeichnet, dass** die Abgabe der Spritzflüssigkeit düsenweise und/oder teilbreitenweise erfolgt, wobei vorzugsweise eine ausbringfähige Verdünnung der Vormischungsflüssigkeit bei Freigabe der entsprechenden Spritzdüse beziehungsweise Teilbreite vorgenommen wird.

8. Verfahren nach einem der vorhergehenden Ansprüche, **dadurch gekennzeichnet, dass** der Füllstand im Vormischungsbehälter (28a, 28b, 28c) ermittelt wird, vorzugsweise zur Ermittlung der Restmenge und/oder des erforderlichen Wiederauffüllens, wobei dies vorzugsweise mittels wenigstens eines Sensors erfolgt, wobei der wenigstens eine Sensor insbesondere zur Ermittlung des Füllstands, der Durchflussmenge, der Entnahmemenge, der Ventilstände und/oder des Drucks dient.

9. Flüssigkeitskreislauf für eine Spritzeinrichtung, vorzugsweise Feldspritze, zum Ausbringen einer Spritzflüssigkeit mit insbesondere wenigstens einem Wirkstoff auf einer landwirtschaftlichen Fläche, vorzugsweise gemäß einem Verfahren nach einem der vorhergehenden Ansprüche, **dadurch gekennzeichnet, dass** mehrere Vormischungsbehälter (28a, 28b, 28c) zur Herstellung und/oder Bevorratung mehrerer konzentrierter Vormischungsflüssigkeiten aus wenigstens einem Spritzmittel und einer Trägerflüssigkeit vorgesehen sind, wobei die Vormischungsflüssigkeiten zum Ausbringen in mit einer weiteren Menge Trägerflüssigkeit verdünnter Form als Spritzflüssigkeiten vorliegen, und für jede der Vormischungsflüssigkeiten jeweils zumindest ein separater Vormischungsbehälter (28a, 28b, 28c) vorgesehen ist, wobei die Vormischungsbehälter (28a, 28b, 28c) vorzugsweise dasselbe Volumen aufweisen.

10. Flüssigkeitskreislauf nach Anspruch 10, **dadurch gekennzeichnet, dass** wenigstens ein Flüssigkeitskreislauf zum Umpumpen der wenigstens einen Vormischungsflüssigkeit zwischen dem wenigstens einen Vormischungsbehälter (28a, 28b, 28c) und wenigstens einer Spritzdüse (19) der Spritzeinrichtung vorgesehen ist, wobei insbesondere ein separater Flüssigkeitskreislauf (37a, 37b, 37c) für jede Vormischungsflüssigkeit vorgesehen ist und wobei vorzugsweise zusätzlich ein Kreislauf für die Trägerflüssigkeit vorgesehen ist.

11. Flüssigkeitskreislauf nach einem der Ansprüche 9 and 10, , **dadurch gekennzeichnet, dass** die Spritzdüsen (19) für eine düsenweise und/oder teilbreitenweise Freigabe der Abgabe der Spritzflüssigkeit vorgesehen sind, indem ein düsenweises und/oder teilbreitenweises Zusammenmischen von Vormischflüssigkeit und Trägerflüssigkeit erfolgt.

12. Flüssigkeitskreislauf nach einem der Ansprüche 9 bis 11, **dadurch gekennzeichnet, dass** eine ausbringfähige Verdünnung der Vormischungsflüssigkeit bei Freigabe der entsprechenden Spritzdüse (19) beziehungsweise Teilbreite erfolgt, wobei vorzugsweise eine separate Ventileinheit (34a, 34b, 34c, 34d) und/oder Dosierpumpe und/oder Mischkammer (28a, 28b, 28c) je Spritzdüse (19) beziehungsweise Teilbreite vorgesehen ist.

13. Flüssigkeitskreislauf nach einem der Ansprüche 9 bis 12, **dadurch gekennzeichnet, dass** wenigstens eine Mischkammer (28a, 28b, 28c) zur Verdünnung der wenigstens einen Vormischflüssigkeit mit Trägerflüssigkeit in der Nähe oder an der Spritzdüse (19) vorgesehen ist, vorzugsweise eine separate Mischkammer (28a, 28b, 28c) je Spritzdüse (19) beziehungsweise Teilbreite der Spritzvorrichtung.

14. Flüssigkeitskreislauf nach einem der Ansprüche 9 bis 13 **dadurch gekennzeichnet, dass** zur Ermittlung des Füllstands im Vormischungsbehälter (28a, 28b, 28c), vorzugsweise zur Ermittlung der Restmenge und/oder des erforderlichen Wiederauffüllens, wenigstens ein Sensor vorgesehen ist, wobei der wenigstens eine Sensor insbesondere zur Ermittlung des Füllstands, der Durchflussmenge, der Entnahmemenge, der Ventilstände und/oder des Drucks dient.

15. Spritzvorrichtung, vorzugsweise Feldspritze, zum Ausbringen einer Spritzflüssigkeit auf einer landwirtschaftlichen Fläche mit einem Flüssigkeitskreislauf nach einem der Ansprüche 9 bis 14, insbesondere zum Ausführen eines Verfahrens nach einem der Ansprüche 1 bis 8.

## Claims

1. Method for applying a spraying liquid on an agricultural area by means of a spraying device, preferably a field sprayer (10), and/or for operating a spraying device, preferably a field sprayer (10), wherein at least one spraying agent is diluted with a carrier liquid to produce a spraying liquid which can be applied, and is applied, wherein the spraying agent contains at least one active substance, wherein a plurality of concentrated pre-mixing liquids are produced from a quantity of the at least one spraying agent and a quantity of carrier liquid and/or stored, and said pre-mixing liquids for application are diluted with a further quantity of carrier liquid to provide the spraying liquid which can be applied, and **characterized in that** each of the pre-mixing liquids is stored in each case in at least one separate pre-mixing container (28a, 28b, 28c).

2. Method according to one of the preceding claims, **characterized in that** at least one pre-mixing liquid is circulated by means of a pre-mixing circuit (37a, 37b, 37c), preferably between a pre-mixing container (28a, 28b, 28c) and at least one spray nozzle, wherein in particular mixing and/or recirculating takes place in the pre-mixing container (28a, 28b, 28c) .

3. Method according to either of the preceding claims, **characterized in that** a previously known volume of the or each pre-mixing liquid is blended, wherein the pre-mixing liquid is preferably blended in a pre-mixing container (28a, 28b, 28c) having a known volume, wherein preferably all the pre-mixing containers (28a, 28b, 28c) have the same volume.

4. Method according to one of the preceding claims, **characterized in that** the spraying agent or the at least one active substance is diluted with the carrier liquid to form the pre-mixing liquid in such a manner that a previously determined concentration of the spraying agent or of the at least one active substance is achieved.

5. Method according to one of the preceding claims, **characterized in that** preferably all the pre-mixing liquids are blended with such a pre-defined concentration of the spraying agent or of the at least one active substance that an identical or comparable dilution ratio with carrier liquid is required for an intended effect for application.

6. Method according to one of the preceding claims, **characterized in that** preferably all the pre-mixing liquids are blended with such a pre-defined concentration of the spraying agent or of the at least one active substance that the rate of pre-mixing liquid to be conveyed for the spraying operation is coordinated with the pump used for this purpose.

7. Method according to one of the preceding claims, **characterized in that** the spraying liquid is delivered by nozzle and/or over partial widths, wherein preferably a dilution of the pre-mixing liquid so as to be capable of application is undertaken when the corresponding spray nozzle or partial width is opened up.

8. Method according to one of the preceding claims, **characterized in that** the filling level in the pre-mixing container (28a, 28b, 28c) is determined, preferably for determining the residual quantity and/or the required re-filling, wherein this preferably takes place by means of at least one sensor, wherein the at least one sensor serves in particular for determining the filling level, the flow rate, the delivery rate, the valve states and/or the pressure.

9. Liquid circuit for a spraying device, preferably a field sprayer, for applying a spraying liquid with in particular at least one active substance on an agricultural area, preferably according to a method according to one of the preceding claims, **characterized in that** a plurality of pre-mixing containers (28a, 28b, 28c) are provided for producing and/or storing a plurality of concentrated pre-mixing liquids consisting of at least one spraying agent and a carrier liquid, wherein the pre-mixing liquids for application are present as spraying liquids in a form diluted with a further quantity of carrier liquid, and in each case at least one separate pre-mixing container (28a, 28b, 28c) is provided for each of the pre-mixing liquids, wherein the pre-mixing containers (28a, 28b, 28c) preferably have the same volume.

10. Liquid circuit according to Claim 10, **characterized in that** at least one liquid circuit is provided for circulating the at least one pre-mixing liquid between the at least one pre-mixing container (28a, 28b, 28c) and at least one spray nozzle (19) of the spraying device), wherein in particular a separate liquid circuit (37a, 37b, 37c) is provided for each pre-mixing liquid, and wherein preferably a circuit is additionally provided for the carrier liquid.

11. Liquid circuit according to either of Claims 9 and 10, **characterized in that** the spray nozzles (19) are provided for releasing the delivery of the spraying liquid by nozzle and/or over partial widths by the pre-mixing liquid and carrier liquid being mixed together by the nozzles and/or over partial widths.

12. Liquid circuit according to one of Claims 9 to 11, **characterized in that** a dilution of the pre-mixing liquid so as to be capable of application takes place when the corresponding spray nozzle (19) or partial width is opened up, wherein preferably a separate valve unit (34a, 34b, 34c, 34d) and/or metering pump and/or mixing chamber (28a, 28b, 28c) is provided per spray nozzle (19) or partial width.

13. Liquid circuit according to one of Claims 9 to 12, **characterized in that** at least one mixing chamber (28a, 28b, 28c) is provided for diluting the at least one pre-mixing liquid with carrier liquid in the vicinity of or at the spray nozzle (19), preferably a separate mixing chamber (28a, 28b, 28c) per spray nozzle (19) or partial width of the spraying device.

14. Liquid circuit according to one of Claims 9 to 13, **characterized in that** at least one sensor is provided for determining the filling level in the pre-mixing container (28a, 28b, 28c), preferably for determining the residual quantity and/or the required re-filling, wherein the at least one sensor serves in particular for determining the filling level, the flow rate, the delivery rate, the valve states and/or the pressure.

15. Spraying device, preferably field sprayer, for applying a spraying liquid on an agricultural area, with a liquid circuit according to one of Claims 9 to 14, in particular for carrying out a method according to one of Claims 1 to 8.

## Revendications

1. Procédé permettant d'épandre un liquide de pulvérisation sur une surface agricole au moyen d'un dispositif de pulvérisation, de préférence d'un pulvérisateur de cultures (10), et/ou d'exploiter un dispositif de pulvérisation, de préférence un pulvérisateur de cultures (10), au moins un produit de pulvérisation étant dilué avec un liquide porteur pour former un liquide de pulvérisation pouvant être épandu et étant épandu, le produit de pulvérisation contenant au moins une substance active, plusieurs liquides de prémélange concentrés étant préparés à partir d'une quantité du au moins un produit de pulvérisation et d'une quantité de liquide porteur et/ou étant stockés, et ces liquides de prémélange étant dilués pour l'épandage avec une quantité supplémentaire de liquide porteur pour former le liquide de pulvérisation pouvant être épandu, et
**caractérisé en ce que** chacun des liquides de prémélange est stocké respectivement dans au moins un réservoir de prémélange (28a, 28b, 28c) séparé.

2. Procédé selon l'une quelconque des revendications précédentes, **caractérisé en ce qu'**au moins un liquide de prémélange est transvasé par pompe au moyen d'un circuit de prémélange (37a, 37b, 37c), de préférence entre un réservoir de prémélange (28a, 28b, 28c) et au moins une buse de pulvérisation, en particulier un prémélange ou un transvasement par pompe étant effectué dans le réservoir de pulvérisation (28a, 28b, 28c).

3. Procédé selon l'une quelconque des revendications précédentes, **caractérisé en ce qu'**un volume connu préalablement dudit ou de chaque liquide de prémélange est mélangé, le liquide de prémélange étant de préférence mélangé dans un réservoir de prémélange (28a, 28b, 28c) avec un volume connu, tous les réservoirs de prémélange (28a, 28b, 28c) ayant de préférence le même volume.

4. Procédé selon l'une quelconque des revendications précédentes, **caractérisé en ce que** le produit de pulvérisation ou ladite au moins une substance active est dilué(e) avec le liquide porteur pour former le liquide de prémélange de telle sorte qu'une concentration prédéterminée du produit de pulvérisation ou de ladite au moins une substance active soit atteinte.

5. Procédé selon l'une quelconque des revendications précédentes, **caractérisé en ce que** de préférence tous les liquides de prémélange sont mélangés avec une concentration prédéfinie du produit de pulvérisation ou de ladite au moins une substance active de telle sorte qu'un rapport de dilution avec du liquide porteur pour l'épandage identique ou similaire soit nécessaire pour un effet prévu.

6. Procédé selon l'une quelconque des revendications précédentes, **caractérisé en ce que** de préférence tous les liquides de prémélange sont mélangés à une concentration prédéfinie du produit de pulvérisation ou de ladite au moins une substance active de telle sorte que la quantité de liquide de prémélange à débiter pour le processus de pulvérisation soit adaptée à la pompe utilisée à cet effet.

7. Procédé selon l'une quelconque des revendications précédentes, **caractérisé en ce que** la distribution du liquide de pulvérisation est effectuée buse par buse et/ou tronçon par tronçon, dans lequel de préférence une dilution apte à être épandue du liquide de prémélange est effectuée à la libération de la buse de pulvérisation ou du tronçon correspondant(e).

8. Procédé selon l'une quelconque des revendications précédentes, **caractérisé en ce que** le niveau dans le réservoir de prémélange (28a, 28b, 28c) est déterminé, de préférence pour déterminer la quantité restante et/ou le réapprovisionnement nécessaire, ceci étant effectué de préférence au moyen d'au moins un capteur, ledit au moins un capteur servant en particulier à déterminer le niveau, le débit de passage, la quantité de prélèvement, les positions des vannes et/ou la pression.

9. Circuit de liquide pour un dispositif de pulvérisation, de préférence un pulvérisateur de cultures, permettant d'épandre un liquide de pulvérisation avec en particulier au moins une substance active sur une surface agricole, de préférence selon un procédé selon l'une quelconque des revendications précédentes,
**caractérisé en ce que** plusieurs réservoirs de prémélange (28a, 28b, 28c) sont prévus pour la préparation et/ou le stockage de plusieurs liquides de prémélange concentrés composés d'au moins un produit de pulvérisation et d'un liquide porteur, dans lequel les liquides de prémélange pour l'épandage sont présents comme des liquides de pulvérisation sous une forme diluée avec une quantité supplémentaire de liquide porteur, et pour chacun des liquides de prémélange, respectivement au moins un réservoir de prémélange (28a, 28b, 28c) séparé est prévu, les réservoirs de prémélange (28a, 28b, 28c) ayant de préférence le même volume.

10. Circuit de liquide selon la revendication 10, **caractérisé en ce qu'**au moins un circuit de liquide pour transvaser ledit au moins un liquide de prémélange est prévu entre ledit au moins un réservoir de prémélange (28a, 28b, 28c) et au moins une buse de pulvérisation (19) du dispositif de pulvérisation, dans lequel en particulier un circuit de liquide (37a, 37b, 37c) séparé est prévu pour chaque liquide de prémélange, et de préférence en outre un circuit pour le liquide porteur est prévu.

11. Circuit de liquide selon l'une quelconque des revendications 9 et 10, **caractérisé en ce que** les buses de pulvérisation (19) sont prévues pour une libération ou distribution du liquide de pulvérisation buse par buse et/ou tronçon par tronçon **en ce qu'**un mélange de liquide de prémélange et de liquide porteur est effectué buse par buse et/ou tronçon par tronçon.

12. Circuit de liquide selon l'une quelconque des revendications 9 à 11, **caractérisé en ce qu'**une dilution apte à être épandue du liquide de prémélange est effectuée à la libération de la buse de pulvérisation (19) ou du tronçon correspondant(e), dans lequel de préférence une unité de vanne séparée (34a, 34b, 34c, 34d) et/ou une pompe de dosage et/ou une chambre de mélange (28a, 28b, 28c) sont prévues pour chaque buse de pulvérisation (19) ou chaque tronçon.

13. Circuit de liquide selon l'une quelconque des revendications 9 à 12, **caractérisé en ce qu'**au moins une chambre de mélange (28a, 28b, 28c) pour la dilution dudit au moins un liquide de prémélange avec un liquide porteur est prévue à proximité ou au niveau de la buse de pulvérisation (19), de préférence une chambre de mélange (28a, 28b, 28c) séparée pour chaque buse de pulvérisation (19) ou chaque tronçon du dispositif de pulvérisation.

14. Circuit de liquide selon l'une quelconque des revendications 9 à 13, **caractérisé en ce que** pour la détermination du niveau dans le réservoir de prémélange (28a, 28b, 28c), de préférence pour la détermination de la quantité restante et/ou du réapprovisionnement nécessaire, au moins un capteur est prévu, ledit au moins un capteur servant en particulier à déterminer le niveau, le débit de passage, la quantité de prélèvement, les positions des vannes et/ou la pression.

15. Dispositif de pulvérisation, de préférence pulvérisateur de cultures, permettant d'épandre un liquide de pulvérisation sur une surface agricole, comprenant un circuit de liquide selon l'une quelconque des revendications 9 à 14, en particulier pour exécuter un procédé selon l'une quelconque des revendications 1 à 8.
